# EUROPÄISCHE PATENTSCHRIFT

(11) **EP 1 102 943 B1**
(45) Veröffentlichungstag und Bekanntmachung des Hinweises auf die Patenterteilung: **02.05.2003**
(21) Anmeldenummer: 00931279.4
(22) Anmeldetag: 02.06.2000
(51) Int. Cl.: F16L 21/02, F16L 47/06

(54) **ROHRKUPPLUNG UND VERFAHREN ZU IHRER HERSTELLUNG**
PIPE FITTING AND METHOD FOR THE PRODUCTION THEREOF
RACCORD DE TUYAUX ET SON PROCEDE DE REALISATION

(30) Priorität: 07.06.1999 DE 19925817
(43) Veröffentlichungstag der Anmeldung: 30.05.2001
(73) Patentinhaber: Hobas Engineering GmbH, 9020 Klagenfurt (AT)
(72) Erfinder: KNAUDER, Josef, A-9500 Villach (AT)
(74) Vertreter: Becker, Thomas, Dr., Dipl.-Ing.
(86) Internationale Anmeldenummer: EP0005038
(87) Internationale Veröffentlichungsnummer: WO00075547

(56) Entgegenhaltungen:
- DE-A- 2 217 488
- DE-A- 2 607 317
- DE-A- 3 113 320
- US-A- 4 174 125

## Beschreibung

Die Erfindung betrifft eine Rohrkupplung, insbesondere zur Verbindung von Abwasserrohren, im besonderen Abwasserrohren aus glasfaserverstärktem Kunststoff.

Eine solche Rohrkupplung ist aus der DE 27 44 739 A1 und der US 4 174 125 A bekannt. Bezüglich des grundsätzlichen Aufbaus einer Rohrkupplung und ihrer Verwendung wird insoweit auf die genannte Schrift Bezug genommen.

Die bekannte Rohrkupplung umfaßt eine rohrartige Muffe aus glasfaserverstärktem Kunststoff und einer, die Muffe innenseitig bedeckenden Dichtung aus einem gummielastischen Material, wobei die Dichtung mindestens eine, radial zur Muffe nach innen vorkragende Dichtungslippe an jedem axialen Ende aufweist. Muffe und Dichtung sind mechanisch über korrespondierende Vor- und Rücksprünge im Bereich der Innenseite der Muffe beziehungsweise Außenseite der Dichtung verankert.

Entsprechend kompliziert ist die Herstellung der bekannten Rohrkupplung. Trotz der Vielzahl der mechanischen Verankerungsteile löst sich die Dichtung beim axialen Einschieben korrespondierender Rohrenden immer wieder.

Der Erfindung liegt die Aufgabe zugrunde, eine Rohrkupplung der gattungsgemäßen Art herzustellen, die in einem einfachen Verfahren herstellbar ist und eine sichere und dauerhafte Verbindung von Dichtung und Muffe schafft.

Grundüberlegung der Erfindung ist es, das komplizierte Grenzflächenprofil zwischen Dichtung und Muffe durch eine plane (unprofilierte) Kontaktfläche, insbesondere zylindrische Kontaktfläche, zu ersetzen.

Das Problem dabei ist jedoch, daß zwei völlig unterschiedliche Werkstoffe für die Muffe beziehungsweise die Dichtung miteinander verbunden werden müssen. Grundsätzlich besteht die Muffe aus einem festen, harten Material, während die Dichtung gummielastisch ist.

Die Muffe kann beispielsweise aus einem glasfaserverstärkten Kunststoff, beispielsweise einem glasfaserverstärkten Polyesterharz (mit verschiedenen Zusätzen und Zuschlägen) bestehen, während als Material für die Dichtung beispielsweise Kautschuk oder Kautschuk-ähnliche Materialien wie Ethylen/Propylen-Dien-Terpolymer (EPDM) verwendet werden kann.

Derzeit sind keine Klebstoffe oder Haftvermittler im Markt bekannt, die eine sichere und dauerhafte Verbindung derart unterschiedlicher Werkstoffe ermöglichen.

Der Erfindung liegt die Erkenntnis zugrunde, daß eine entsprechende Verbindung durch eine chemische Vernetzung der korrespondierenden Oberflächenabschnitte von Dichtung und Muffe erreicht werden kann, weshalb die Erfindung in ihrer allgemeinsten Ausführungsform eine Rohrkupplung mit folgenden Merkmalen umfaßt:
- einer rohrartigen Muffe aus glasfaserverstärktem Kunststoff,
- einer, die Muffe innenseitig bedeckenden Dichtung aus einem gummielastischen Material, wobei
- die Dichtung mindestens eine, radial zur Muffe nach innen vorkragende Dichtungslippe an jedem axialen Ende aufweist und
- die korrespondierenden Flächenabschnitte von Dichtung und Muffe durch chemische Vernetzung materialschlüssig miteinander verbunden sind.

Dabei kann die Dichtung aus dem genannten EPDM und die Muffe aus einem ungesättigten Polyesterharz (mit entsprechenden Zuschlägen und Zusätzen) bestehen.

Vorzugsweise weist die Muffe eine zylindrische Innenfläche und die Dichtung eine zylindrische Außenfläche auf, wenngleich sich die genannte chemische Vernetzung selbstverständlich auch an anderen Oberflächengeometrien erreichen läßt.

Die chemische Vernetzung kann auf unterschiedliche Art und Weise erfolgen, beispielsweise nach einer thermischen Behandlung insbesondere der Umfangsfläche der Dichtung und anschließende Umwicklung mit einem ungesättigten Polyesterharz zur Ausbildung der Muffe.

In seiner allgemeinsten Ausführungsform umfaßt das Verfahren zur Herstellung einer Rohrkupplung der vorgenannten Art folgende Schritte:
- die Dichtung wird auf ihrer Außenfläche bis zum Aufbrechen von Kohlenstoffketten des Dichtungsmaterials thermisch erwärmt,
- danach wird ein Haftvermittler oder eine Mischung aus dem Haftvermittler und dem Material der Muffe auf die Außenfläche der Dichtung aufgetragen,
- anschließend wird der glasfaserverstärkte Kunststoff unter Ausbildung der Muffe auf die zuvor beschichtete Außenfläche der Dichtung aufgebracht, bevor abschließend
- eine Polymerisation des glasfaserverstärkten Kunststoffs unter Wärme bis zur vollständigen Aushärtung erfolgt.

Zur Konfektionierung bietet es sich an, die Dichtung vor der Erwärmung ihrer Außenfläche auf eine Form, beispielsweise einen Dorn, aufzusetzen.

Die thermische Erwärmung der Außenfläche der Dichtung kann beispielsweise mittels UV- oder IR-Strahlung erfolgen, wobei die Außenfläche der Dichtung eine Temperatur von etwa 60° C erreichen sollte.

Die Vernetzung des Dichtungsmaterials mit dem Material der Muffe kann durch Zwischenschaltung eines Haftvermittlers oder einer Mischung aus dem Haftvermittler und dem Material der Muffe gefördert werden.

Dabei kann der Haftvermittler beispielsweise aus einem Polyurethan bestehen, welches die zuvor durch thermische Behandlung aufgebrochenen C-Ketten des Dichtungsmaterials wieder schließt.

Zur Herstellung der Rohrkupplung kann eine Form verwendet werden, die länger als die Breite der Dichtung ist, sofern die Dichtung endseitig von der Muffe eingefaßt werden soll.

Dabei kann eine Form verwendet werden, die umfangsseitig eine Ausnehmung zur Aufnahme der Dichtung aufweist und an ihren, die Dichtung endseitig überragenden Enden umfangsseitig mit der Außenfläche der Dichtung fluchtet. Auf diese Weise kann die Muffe mit größerer Breite gegenüber der Dichtung ausgebildet werden.

Es kann aber auch eine Form verwendet werden, bei der die Ausnehmung länger ist als die Breite der Dichtung, um so beispielsweise zusätzlich Stützprofile beidseitig der Dichtung aufzunehmen, die anschließend ebenfalls von der Muffe überdeckt werden.

Als Werkstoff für die Form eignet sich beispielsweise Stahl.

Um auch die zuvor genannten Dichtungslippen der vorkonfektionierten Dichtung zerstörungsfrei aufnehmen zu können, kann vor dem Auflegen der Dichtung auf die Form ein korrespondierend geformter Stützring aufgesetzt werden, wie dies aus der DE 27 44 739 A1 bekannt ist.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher beschrieben.

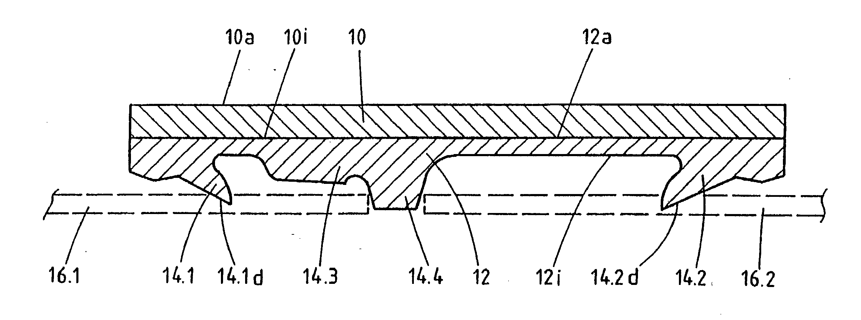

Dabei zeigt die einzige Figur einen Schnitt durch den Mantel einer erfindungsgemäßen Rohrkupplung.

Mit dem Bezugszeichen 10 ist eine Muffe aus einem glasfaserverstärkten Kunststoff (Polyesterharz), mit dem Bezugszeichen 12 eine zugehörige Dichtung aus EPDM dargestellt.

Die Muffe 10 besitzt eine zylindrische Innenfläche 10i und eine zylindrische Außenfläche 10a.

Die Dichtung 12 besitzt eine zylindrische Außenfläche 12a und eine profiliert ausgebildete Innenfläche 12i.

Der Figur ist zu entnehmen, daß die Dichtung 12 endseitig mit je einer Dichtungslippe 14.1 beziehungsweise 14.2 ausgebildet ist, wobei die Dichtungslippen 14.1, 14.2 schräg nach innen aufeinander zu gerichtet verlaufen.

Zwischen den Dichtungslippen 14.1, 14.2 befindet sich ein Abschnitt 14.3 der Dichtung 12, der eine größere Materialstärke aufweist als die benachbarten Dichtungsabschnitte zu den Dichtungslippen 14.1, 14.2 hin. Aus dem verdickten Abschnitt 14.3 steht im wesentlichen radial ein Dichtungszapfen 14.4 nach innen vor, und zwar über die Enden der Dichtungslippen 14.1, 14.2 im dargestellten unbelasteten Zustand hinaus.

Die Außenfläche 12a der Dichtung 12 ist mit der Innenfläche 10i der Muffe 10 mittels thermischer Erwärmung unter Zwischenschaltung eines Haftvermittlers chemisch vernetzt, so daß sich eine materialschlüssige Verbindung zwischen Dichtung 12 und Muffe 10 ergibt, die einen absolut sicheren Halt der Dichtung 12 an der Muffe 10 schafft, und zwar auch dann, wenn beispielsweise zugehörige Endstücke von Rohrleitungen in die dargestellte Rohrkupplung eingeschoben werden, wie dies gestrichelt in der Figur dargestellt ist. Beim gegenläufigen Einschieben korrespondierender Rohrleitungen 16.1, 16.2 werden zunächst die korrespondierenden Dichtungslippen 14.1 beziehungsweise 14.2 nach innen und außen weggedrückt, so daß sie sich mit ihren Dichtungsflächen 14.1d, 14.2d an die Außenfläche der Rohrleitung 16.1 beziehungsweise 16.2 anschmiegen.

Die Rohrleitungen 16.1, 16.2 werden soweit gegeneinander vorgedrückt, bis ihre Stirnflächen gegen den Dichtungszapfen 14.4 beidseitig anliegen.

## Patentansprüche

1. Rohrkupplung mit:
a) einer rohrartigen Muffe (10) aus glasfaserverstärktem Kunststoff,
b) einer, die Muffe (10) innenseitig bedeckenden Dichtung (12) aus einem gummielastischen Material, wobei
c) die Dichtung (12) mindestens eine, radial zur Muffe nach innen vorkragende Dichtungslippe (14.1, 14.2) an jedem axialen Ende aufweist,
**dadurch gekennzeichnet, daß**
d) die korrespondierenden Flächenabschnitte (10i, 12a) von Dichtung (12) und Muffe (10) durch chemische Vernetzung materialschlüssig miteinander verbunden sind.

2. Rohrkupplung nach Anspruch 1, bei der die Dichtung (12) aus einem Ethylen/Propylen-Dien-Terpolymer besteht.

3. Rohrkupplung nach Anspruch 1, bei der die Muffe (10) aus einem Material auf Basis mindestens eines Polyesterharzes besteht.

4. Rohrkupplung nach Anspruch 1, bei der die Muffe (10) eine zylindrische Innenfläche (10i) und die Dichtung (12) eine zylindrische Außenfläche (12a) aufweist.

5. Rohrkupplung nach Anspruch 1, bei der die Dichtungslippen (14.1, 14.2) schräg nach innen aufeinander zu verlaufen.

6. Verfahren zur Herstellung einer Rohrkupplung nach einem der Ansprüche 1 bis 5 mit folgenden Schritten:
a) die Dichtung wird auf ihrer Außenfläche bis zum Aufbrechen von C-Ketten des Dichtungsmaterials thermisch erwärmt,
b) danach wird ggf. ein Haftvermittler oder eine Mischung aus dem Haftvermittler und dem Material der Muffe auf die Außenfläche der Dichtung aufgetragen,
c) anschließend wird der glasfaserverstärkte Kunststoff unter Ausbildung der Muffe auf die zuvor beschichtete Außenfläche der Dichtung aufgebracht,
d) danach erfolgt eine Polymerisation des glasfaserverstärkten Kunststoffs unter Wärme bis zur vollständigen Aushärtung.

7. Verfahren nach Anspruch 6, bei dem die Dichtung vor der Erwärmung ihrer Außenfläche auf eine Form aufgesetzt wird.

8. Verfahren nach Anspruch 6, bei dem die thermische Erwärmung der Außenfläche der Dichtung mittels UV- oder IR-Strahlung erfolgt.

9. Verfahren nach Anspruch 6, bei dem die Außenfläche der Dichtung auf etwa 60°C erwärmt wird.

10. Verfahren nach Anspruch 6, bei dem ein Haftvermittler aus Polyurethan aufgetragen wird.

11. Verfahren nach Anspruch 7, bei dem eine Form verwendet wird, die länger ist als die Breite der Dichtung.

12. Verfahren nach Anspruch 11, bei dem eine Form verwendet wird, die umfangsseitig eine Ausnehmung zur Aufnahme der Dichtung aufweist und an ihren die Dichtung endseitig überragenden Enden umfangsseitig mit der Außenfläche der Dichtung fluchtet.

13. Verfahren nach Anspruch 6, bei dem eine Form verwendet wird, die umfangsseitig eine Ausnehmung zur Aufnahme der Dichtung sowie zweier Stützprofile beidseitig der Dichtung aufweist.

14. Verfahren nach Anspruch 6, bei dem eine Stahlform verwendet wird.

## Claims

1. Tube coupling with:
a) a tube-like manchette (10) of glass-fiber-reinforced plastic,
b) a seal (12) made of a rubber elastic material covering the manchette (10) on the inside wherein
c) the seal (12) has at least one sealing lip (14.1, 14.2) at each axial end projecting radially inwardly to the manchette,
**characterized in that**
d) the corresponding surface sections (10i, 12a) of the seal (12) and the manchette (10) are connected to each other with material-fit by chemical crosslinking.

2. Tube coupling according to claim 1, wherein the seal (12) is made of an ethylene/propylene dien terpolymer.

3. Tube coupling according to claim 1, wherein the manchette (10) is made of a material on a basis of at least one polyester resin.

4. Tube coupling according to claim 1, wherein the manchette (10) has a cylindrical inner surface (10i) and the seal (12) has a cylindrical outer surface (12a).

5. Tube coupling according to claim 1, wherein the sealing lips (14.1, 14.2) run transversally in inward direction toward each other.

6. Process for producing a tube coupling according to one of the claims 1 to 5 with the following steps:
a) the seal is thermally heated on its outer surface up to a breaking up of the C chains of the sealing material;
b) thereafter, if necessary, a bonding agent or a mixture of the bonding agent and the material of the manchette is applied on the outer surface of the seal;
c) next, the glass-fiber-reinforced plastic is applied, while forming the manchette, on the previously coated outer surface of the seal;
d) thereafter, the polymerization of the glass-fiber-reinforced plastic takes place under heat up to the complete hardening.

7. Process according to claim 6, wherein the seal, before heating its outer surface, is put on a mold.

8. Process according to claim 6, wherein the thermal heating of the outer surface of the seal takes place by means of UV or IR radiation.

9. Process according to claim 6, wherein the outer surface of the seal is heated to about 60°C.

10. Process according to claim 6, wherein a bonding agent of polyurethane is applied.

11. Process according to claim 7, wherein a mold is used, which is longer than the width of the seal.

12. Process according to claim 11, wherein a mold is used, which has on its periphery a recess for accommodating the seal, and which is aligned on its periphery with the outer surface of the seal at its ends, which project beyond the seal at its end.

13. Process according to claim 6, wherein a mold is used, which has a recess on its periphery for accommodating the seal, as well as two supporting profiles on both sides of the seal.

14. Process according to claim 6, wherein a steel mold is used.

## Revendications

1. Raccord de tuyaux ayant :
a) un manchon tubulaire (10), en matière synthétique renforcée de fibres de verre,
b) un joint d'étanchéité (12), en matériau élastique caoutchouté, recouvrant le manchon (10) sur la face interne,
c) le joint d'étanchéité (12) présentant, à chaque extrémité axiale, au moins une lèvre d'étanchéité faisant saillie vers l'intérieur d'une manière radiale par rapport au manchon (14.1, 14.2),
**caractérisé en ce que**
d) les surfaces superficielles correspondantes (10i, 12a) du joint d'étanchéité (12) et du manchon (10) sont reliées les unes aux autres par une liaison matérielle au moyen d'une réticulation chimique.

2. Raccord de tuyaux selon la revendication 1, dans lequel le joint d'étanchéité (12) se compose d'un terpolymère èthylène/propylène/diène.

3. Raccord de tuyaux selon la revendication 1, dans lequel le manchon (10) se compose d'un matériau à base d'au moins une résine de polyester.

4. Raccord de tuyaux selon la revendication 1, dans lequel le manchon (10) présente une surface interne cylindrique (10i) et en ce que le joint d'étanchéité (12) présente une surface externe cylindrique (12a).

5. Raccord de tuyaux selon la revendication 1, dans lequel les lèvres d'étanchéité (14.1, 14.2) passent à l'oblique l'une sur l'autre vers l'intérieur.

6. Procédé de fabrication d'un raccord de tuyaux selon l'une des revendications 1 à 5 comprenant les étapes suivantes :
a) le joint d'étanchéité est chauffé par voie thermique sur sa surface externe jusqu'à la rupture des chaînes de C du matériau de joint d'étanchéité,
b) un agent favorisant l'adhérence ou un mélange de l'agent favorisant l'adhérence du matériau du manchon est, le cas échéant, ensuite appliqué sur la surface externe du joint d'étanchéité,
c) la matière synthétique renforcée de fibres de verre est ensuite appliquée, lors de la formation du manchon, sur la surface externe, revêtue au préalable, du joint d'étanchéité,
d) une polymérisation de la matière synthétique renforcée de fibres de verre se produisant alors sous l'effet de la chaleur jusqu'au durcissement complet.

7. Procédé selon la revendication 6, dans lequel le joint d'étanchéité est placé sur un moule avant le réchauffement de sa surface externe.

8. Procédé selon la revendication 6, selon lequel le réchauffement thermique de la surface externe du joint d'étanchéité se produit à l'aide d'un rayonnement UV ou IR.

9. Procédé selon la revendication 6, dans lequel la surface externe du joint d'étanchéité est chauffée à environ 60°c.

10. Procédé selon la revendication 6, dans lequel on applique un agent favorisant l'adhérence à base de polyuréthane.

11. Procédé selon la revendication 7, dans lequel on utilise un moule qui est plus long que la largeur du joint d'étanchéité.

12. Procédé selon la revendication 11, dans lequel on utilise un moule dont le pourtour comporte un évidement destiné à recevoir le joint d'étanchéité et dont les extrémités, qui, du côté de l'extrémité, sont en saillie au-dessus du joint d'étanchéité, sont alignées, du côté du pourtour, avec la face extérieure du joint d'étanchéité.

13. Procédé selon la revendication 6, dans lequel on utilise un moule qui présente, sur son pourtour, un évidement pour recevoir le joint d'étanchéité ainsi que deux profils de support des deux côtés du joint d'étanchéité.

14. Procédé selon la revendication 6, dans lequel on utilise un moule en acier.
